# EUROPEAN PATENT SPECIFICATION

(11) **EP 0 359 729 B1**
(45) Date of publication and mention of the grant of the patent: **12.04.1995**
(21) Application number: 89850278.6
(22) Date of filing: 29.08.1989
(51) Int. Cl.: H04N 7/167, G09C 5/00, H04L 9/00

(54) **Encryption with subsequent source coding**
Chiffrierverfahren mit nachträglicher Quellenkodierung
Chiffrage de code avec codage de source ultérieure

(30) Priority: 15.09.1988 SE 8803264
(43) Date of publication of application: 21.03.1990
(73) Proprietor: TELIA AB, 123 86 Farsta (SE)
(72) Inventor: Eriksson, Lars-Erik, S-123 86 Farsta (SE); Forchheimer, Robert, S-581 83 Linköping (SE); Bertilsson, Michael, S-581 83 Linköping (SE); Wallberg, Jonas, S-581 83 Linköping (SE); Ingemarsson, Ingemar, S-581 83 Linköping (SE)
(74) Representative: Karlsson, Berne

(56) References cited:
- EP-A- 0 112 158
- EP-A- 0 304 217
- WO-A-83/03942
- DE-A- 3 731 532
- US-A- 4 575 754
- PATENT ABSTRACTS OF JAPAN vol. 12, no. 94 (E-593) 26 March 1988,& JP-A-62 226785

## Description

### SCOPE OF THE INVENTION

The invention relates to a process for encryption with subsequent source coding of a sequence of information, in respect particularly of moving pictures. Encryption means that the information which exists is concealed, while source coding means that the quantity of data which is required in order to represent the information is reduced.

### BACKGROUND TO THE INVENTION

In transmission of information it is important in many connections to retain this information on its own or within a small group. This means that the information must be concealed in such a manner that an unauthorized person who reads the quantity of data which is being transmitted must not be able to appropriate the information which exists therein. This can be carried out in many different ways, known as encryption methods.

In transmission and storage of information it is important that the quantity of data which is to be transmitted or stored is small. Reducing the amount of data which is required in order to transmit or store respectively a certain amount of information is called source coding. In transmission of information relating to moving pictures, three methods are used primarily. Predictive DPCM coding (differential pulse code modulation) is such a method of compressing the picture information. In this case, use has been made of the knowledge that often only small differences occur between two pictures which follow one another. In the transmitter there is a predictor which predicts, forecasts, using the previous picture, how the next picture will look. A difference is formed and only the prediction error needs to be transmitted to the receiver, which contains a similar predictor for reconstruction of the original picture.

In transformation coding, the picture is divided into blocks of, for example, 8 x 8 or 16 x 16 image points, also referred to as picture elements or PELS. The picture content is transformed mathematically into so-called transformation coefficients which are subsequently quantized. The coefficients for gray areas become zero according to this process and do not need to be transmitted along the telephone lines.

DPCM coding and transformation coding can be combined into a third method, referred to in this application as hybrid coding (actually hybrid DPCM transformation coding), which accordingly makes use of both prediction and transformation. In this connection, therefore, a block is transformed from its PEL domain or the time plane to its transformation domain or the frequency plane by means of, for example, a discrete cosine transformation (DCT). Then the transformation coefficients are quantized and the prediction takes place in the transformation domain with a similar loop to in DPCM coding. It is also possible to reverse the order, so that the transformation takes place inside the prediction loop and the prediction in the PEL domain. The transformation coefficients, which can now accept discrete values between between -128 and +127 for example, are then scanned in the frequency plane, the information-carrying coefficients being concentrated at the beginning of the block.

The three methods above are described in greater detail in Televerkets Tekniska Tidskrift {Televerket's technical periodical}, Tele, volume 91, no. 4, 1985, pages 1-7, and the periodical Elteknik, no. 14, 1986, pages 48-52.

In conventional transmission, the information is first source coded in order to then be encrypted since the encryption destroys what the source coder uses to reduce the quantity of data which the information requires. When encryption and source coding are carried out in this order, it is possible to use a suitable source coder, with regard to the nature of the information, and a suitable encryption method, with regard to how strongly the information is to be concealed.

In many connections, however, it is important to carry out the encryption first and then carry out the source coding, for example when the transmission takes place via a network with a low transmission rate between two local networks which have a high transmission rate. In such an application, it is important to be able to encrypt the information locally within the high speed network. If it is then required to transmit information between high speed networks, the information will not need to be decrypted at the boundary between low and high speed networks, since the information will be encrypted the whole way, that is to say between the end stations. This is desirable from the point of view of security. With conventional encryption methods, this leads to the encryption destroying what the source coder uses to reduce the quantity of data which is required in order to represent the information.

Conventional methods of encryption can be divided into block encryption and encryption with running code. The methods which are used here can be said to be a combination of the two basic methods. Sequences of pictures are divided into blocks, in which each block constitutes a picture or a part of a picture. Within each block, encryption takes place either with a code (which changes from block to block) or with a running code within the block. The latter principle is used in a method with a scanning pattern in the form of a curve which winds forward through the picture.

For many of the proposed encryption methods, a code generator is required which, starting from a fixed code, produces a sequence of codes. This is a common process within encryption technology. There are descriptions in, for example, Henry Beker & Fred Piper: Cipher systems, Northwood Books, London 1982.

### SUMMARY OF THE INVENTION

The object of the invention is to carry out encryption first and source coding subsequently.

In order to carry out an encryption which does not influence the source coding, the encryption operations are carried out so that they do not influence the characteristics in the information which the source coder uses to reduce the quantity of data. A stronger encryption can be achieved if the encryption is allowed to influence the characteristics which the source coder uses to reduce the quantity of data. This leads to stronger encryption but makes it more difficult for the source coder to reduce the quantity of data for the information.

The object of the invention is achieved according to the process according to the accompanying claims.

### DESCRIPTION OF THE DRAWINGS

Fig. 1 is a block diagram of the process according to the invention.

Fig. 2 describes the division of the picture into blocks (transformation blocks).

Fig. 3 describes the encryption operations rotation and reflection.

Fig. 4 describes permutation of bit planes.

Fig. 5 shows a picture sequence in hybrid coding.

Fig. 6 shows an example of an area-filling curve.

### DETAILED DESCRIPTION OF THE INVENTION

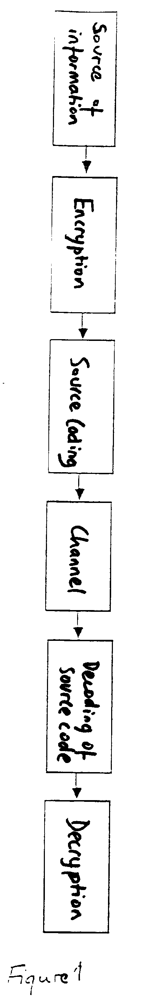

Fig. 1 is a block diagram which shows in which order the different steps are carried out according to a preferred exemplary embodiment. The source of information generates the quantity of data which represents the information which is to be transmitted. The encryption changes the representation of the quantity of data in such a manner that unauthorized persons cannot read the information without knowledge of the encryption process and the encryption code. The source coding reduces the quantity of data which is required to represent the information. This takes place by means of, for example, transformation coding, hybrid coding or DPCM coding. The channel is the part in data transmission which carries out the physical transmission. Source code decoding and decryption perform inverse functions to source coding and encryption.

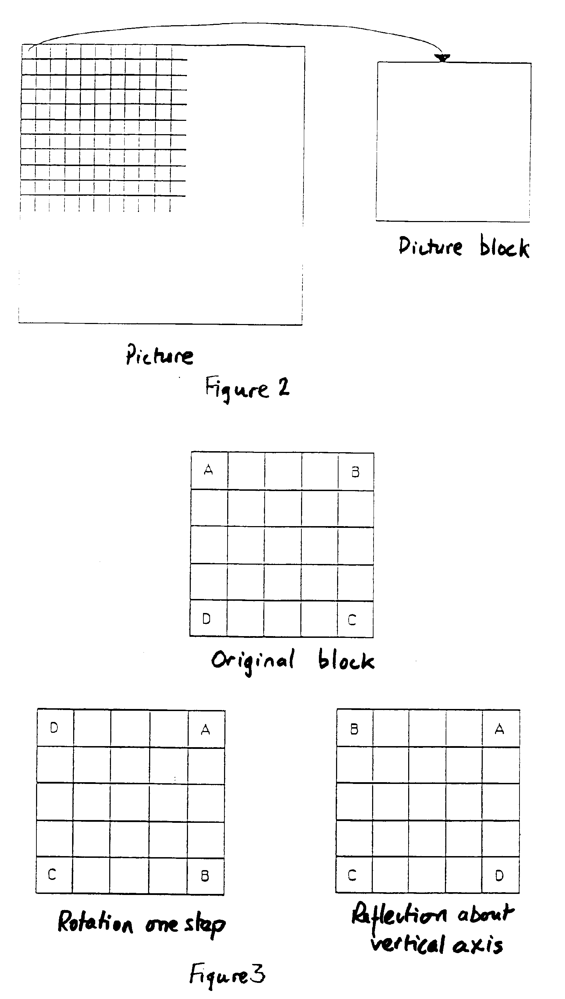

One embodiment of the invention relates to encryption of pictures intended to be transformation coded, that is to say the picture is divided first into blocks, as shown in Fig. 2. This encryption is based upon a global and a local encryption. The global encryption comprises permutations of transformation blocks within the picture, and this can take place in B! different ways if the picture contains B blocks. The local encryption means operations within transformation blocks. These operations are rotations, reflections, inversions, linear shifts and bit plane permutation.

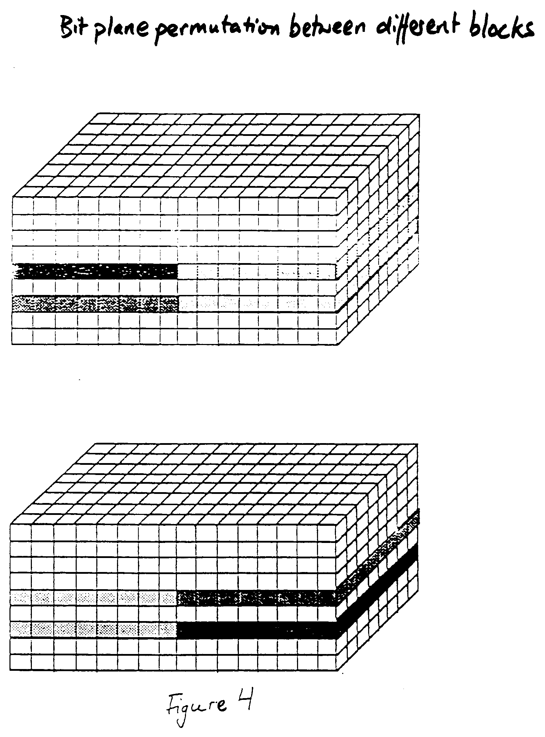

Rotation and reflection are described in Fig. 3. Inversion means that the image point values are converted to 2ⁿ - 1 - x, where n is the number of bits which is used to represent the image point and x is the previous value of the image point. Bit plane permutation, Fig. 4, means that two blocks are divided up into two parts in the same manner and that these parts are then permuted. This division varies with blocks.

These operations increase the possibility of encrypting locally with maximally a factor 2⁸, which is obtained when all possible combinations are used. These operations make it more difficult for the transformation coder to compress the picture because the dependence which exists between bit planes is destroyed when they are changed.

The local encryption operations are to make it difficult for an unauthorized reader to decrypt the picture. Encrypting with the maximum number of permutation possibilities produces a good encryption together with the global encryption. This is dependent upon the local encryption making it more difficult to break the global encryption. Increasing the strength of the encryption by increasing the number of encryption operations leads to the dependence which exists between the bit levels and picture elements disappearing, which leads to a more difficult situation for the transformation coder. In order to obtain a good compression with the transformation coder, it is required that the dependence within transformation blocks is retained. This dependence is not changed by the operations rotation, reflection and inversion (16 operations). An increase in the number of operations beyond this leads to a reduced compression possibility for the transformation coder.

Another embodiment of the invention relates to encryption of pictures intended to be hybrid coded. In hybrid coding also, as mentioned above, use is made of the temporal dependence in the sequence of pictures. Carrying out a new permutation (which the hybrid coder does not know) for each new picture destroys this dependence.

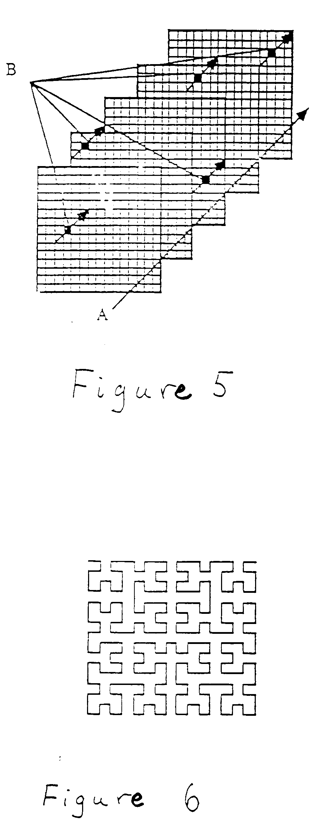

It is possible to avoid this if the permutation is changed upon changes of scene or is held fixed for a number of picture sequences. This is illustrated by A in Fig. 5. By holding the global permutation fixed for a number of pictures, the hybrid coder can make use of the temporal dependence. If, on the other hand, the permutation is changed for each picture, the coder tries to use a temporal dependence between transformation blocks, that is to say it tries to act as if in A while blocks lie as in B. Such a dependence does not exist, whereupon the coder makes an incorrect approximation. Holding the global encryption fixed for a number of picture sequences leads to it being equally difficult to break a picture in this sequence as to break the whole sequence, if the remaining pictures in the sequence do not give any further information for breaking. This means a weakening of the encryption.

If the hybrid coder also takes into consideration the movements which exist in the picture, both the local and the global encryption destroy the possibility of predicting this; the global by permuting transformation blocks in the picture and the local by permuting picture elements and the bit levels in the transformation block. This makes the possibility of encrypting before a hybrid coder small. The operations which it is possible to use are rotations, reflections and inversions of the whole picture. These operations should only be changed upon changes of scene so as not to make it more difficult for the hybrid coder. This leads to a very weak encryption. The possibility of increasing these operations is small. One way would be to sub-sample picture element by picture element in temporal order and permute the amplitude between the sub-samples. However, this produces a limited number of extra encryption operations.

A further manner of encrypting pictures according to the present invention is to read off the picture along a curve which covers the whole or almost the whole picture. This curve winds forward in the picture, from each image point to one of its closest neighbors. The quantity of such curves is very large, which affords possibilities for strong encryption.

In order to obtain a good source coding, it is desirable that the area-filling curve turns often, in order to exploit the fact that the dependence in the picture is greatest in a small area around a given point. An example of such a curve is the Peano-Hilbert curve in Fig. 6.

This curve should not, however, be used in encryption since it looks the same over the whole picture. Instead the curve is generated by an algorithm which is controlled by a pseudo-random sequence, making it possible to recreate the scanning pattern. It is not necessary that all points are scanned through for every picture. It is permissible that a small number of points are not scanned through, provided it is known that these points are scanned through by almost all curves and that the curves are changed often. Using a scanning method like this leads to an ordinary scalar source coding, for example DPCM or delta modulation. A picture scanning such as this affords no possibilities of making use of movement estimation since the curve is changed often and the source coding is assumed not to know which it is. On the other hand, it is possible to make use of temporal dependence if the curve is held fixed between changes of scene or is held fixed for a number of picture sequences. The practically area-filling curve is used advantageously on moving pictures while the area-filling curve can be used on both moving pictures and still pictures.

In transformation coding the possibility of compressing is correspondingly reduced when the number of encryption operations increases. Even a small number of operations, as far as encryption is concerned, produces a considerably worse compression possibility for the transformation coder, because the encryption quickly destroys the information which the transformation coder uses. In order to obtain a moderately strong encryption, the number of operations would be so large that the compression possibilities are considerably worse than without encryption. In more complex methods (the hybrid coder) there is an even smaller possibility of carrying out encryption operations since these require that almost all dependence in the picture is retained. With the encryption operations rotation, reflection and inversion, no worsened data compression possibility is obtained. With bit plane permutations, a worse data reduction is obtained. With area-filling curves, a good encryption can be obtained without the source coding being worsened appreciably, compared with another scanning and scalar source coding.

## Claims

1. A process comprising encryption and subsequent source coding of a sequence of information about moving pictures, wherein the encryption involves steps of concealing the information essentially without influencing the temporal characteristics of the sequence which characteristics are used by the source coding to reduce the quantity of data which is required to represent the information.

2. The process as claimed in Claim 1, wherein the sequence of information is divided into blocks and wherein the encryption takes place by global permutation of blocks and/or local rotation, reflection and inversion of blocks.

3. The process as claimed in Claim 1 or 2, wherein the encryption takes place by permutations within blocks.

4. The process as claimed in Claim 1, 2 or 3, wherein the source coding is carried out with a transformation coder or a hybrid coder.

5. The process as claimed in Claim 4, wherein the encryption is held fixed between changes of scene and wherein the source coding is carried out with a hybrid coder.

6. The process as claimed in Claim 5, wherein the source coding includes movement compensation.

7. The process as claimed in Claim 1, wherein the encryption takes place by means of an area-filling or practically area-filling curve formed by means of a pseudo-random sequence and wherein the source coding takes place with a source coder of DPCM type.

8. The process as claimed in Claim 7, wherein the encryption is held fixed between changes of scene.

## Patentansprüche

1. Verfahren, das Chiffrierung und nachfolgende Quellencodierung einer Informationssequenz über bewegte Bilder aufweist, wobei die Chiffrierung Schritte einschließt, die Information im wesentlichen ohne Beeinflussung der zeitlichen Charakteristiken der Sequenz zu verbergen, welche Charakteristiken durch die Quellencodierung benutzt werden, um die Menge von Daten zu reduzieren, die zum Darstellen der Information erforderlich ist.

2. Verfahren nach Anspruch 1, bei dem die Informationssequenz in Blöcke aufgeteilt wird, und wobei die Chiffrierung durch globale Permutation von Blöcken und/oder lokale Rotation, Reflektion und Inversion von Blöcken stattfindet.

3. Verfahren nach Anspruch 1 oder 2, bei dem die Chiffrierung durch Permutationen innerhalb von Blöcken stattfindet.

4. Verfahren nach Anspruch 1, 2 oder 3, bei dem die Quellencodierung mit einem Transformationscodierer oder einem Hybridcodierer ausgeführt wird.

5. Verfahren nach Anspruch 4, bei dem die Chiffrierung zwischen Szenenänderungen festgehalten wird und bei dem die Quellencodierung mit einem Hybridcodierer ausgeführt wird.

6. Verfahren nach Anspruch 5, bei dem die Quellencodierung Bewegungskompensation einschließt.

7. Verfahren nach Anspruch 1, bei dem die Chiffrierung mit Hilfe einer flächenfüllenden oder praktisch flächenfüllenden Kurve stattfindet, die durch eine pseudo-zufällige Sequenz gebildet wird, und bei dem die Quellencodierung mit einem Quellencodierer vom DPCM-Typ (differentielle Pulscodemodulation) stattfindet.

8. Verfahren nach Anspruch 7, bei dem die Chiffrierung zwischen Szenenwechseln festgehalten wird.

## Revendications

1. Procédé comprenant le cryptage et le codage de source ultérieur d'une série d'informations se rapportant à des images animées, dans lequel le cryptage implique les étapes de masquage de l'information sans influencer globalement les caractéristiques temporelles de la série dont les caractéristiques sont utilisées par le codage de source pour réduire la quantité de données qui est nécessaire pour représenter l'information.

2. Procédé selon la revendication 1, dans lequel la série d'informations est divisée en blocs et dans lequel le cryptage est réalisé par permutation globale de blocs et/ou rotation locale, réflexion et inversion de blocs.

3. Procédé selon les revendications 1 ou 2, dans lequel le cryptage est réalisé par des permutations à 1' intérieur des blocs.

4. Procédé selon les revendications 1, 2 ou 3, dans lequel le codage de source est réalisé avec un codeur de transformation ou un codeur hybride.

5. Procédé selon la revendication 4, dans lequel le cryptage est fixé entre les modifications de scène et dans lequel le codage de source est réalisé avec un codeur hybride.

6. Procédé selon la revendication 5, dans lequel le codage de source inclut une compensation de mouvement.

7. Procédé selon la revendication 1, dans lequel le cryptage est réalisé à l'aide d'une courbe de remplissage de zone ou sensiblement de remplissage de zone formée à l'aide d'une série pseudo-aléatoire et dans lequel le codage de source est réalisé avec un codeur de source du type DPCM (modulation de code d' impulsion différentielle).

8. Procédé selon la revendication 7, dans lequel le cryptage est maintenu fixé entre les modifications de scène.
